# EUROPÄISCHE PATENTSCHRIFT

(11) **EP 3 274 651 B1**
(45) Veröffentlichungstag und Bekanntmachung des Hinweises auf die Patenterteilung: **12.06.2019**
(21) Anmeldenummer: 16718998.4
(22) Anmeldetag: 23.03.2016
(51) Int. Cl.: G01B 11/25

(54) **VERFAHREN UND VORRICHTUNG ZUM VERMESSEN EINES LANGPROFILES**
METHOD AND DEVICE FOR MEASURING A LONG PROFILE
PROCÉDÉ ET DISPOSITIF POUR MESURER UN PROFILÉ LONGITUDINAL

(30) Priorität: 24.03.2015 AT 502372015
(43) Veröffentlichungstag der Anmeldung: 31.01.2018
(73) Patentinhaber: Nextsense GmbH, 8053 Graz (AT)
(72) Erfinder: CLEMENS, Gasser, 8045 Graz (AT); FRIEDRICH PETER, Kaufmann, 8051 Graz (AT); EDUARD, Luttenberger, 8081 Heiligenkreuz (AT); ALBERT, Niel, 8047 Graz (AT)
(74) Vertreter: Wirnsberger & Lerchbaum Patentanwälte OG
(86) Internationale Anmeldenummer: PCT/AT2016/050073
(87) Internationale Veröffentlichungsnummer: WO 2016/149724

(56) Entgegenhaltungen:
- EP-A1- 2 330 380
- EP-A2- 0 364 907
- WO-A1-2014/188309
- DE-A1-102013 103 252

## Beschreibung

Die Erfindung betrifft ein Verfahren zum Vermessen eines insbesondere auf einer erhöhten Temperatur befindlichen Langprofiles, wobei ein Querschnitt des Langprofiles festgestellt wird.

Darüber hinaus betrifft die Erfindung eine Vorrichtung zum Vermessen eines insbesondere auf einer erhöhten Temperatur befindlichen Langprofiles, umfassend eine Messeinrichtung zur Feststellung eines Querschnittes des Langprofiles.

Weiter betrifft die Erfindung eine Verwendung einer solchen Vorrichtung.

Aus dem Stand der Technik sind Verfahren zum Vermessen eines Querschnittes eines Langprofiles, wie beispielsweise eines heißen bzw. auf Walzhitze befindlichen Walzprofiles bekannt.

Beim Vermessen eines heißen Langprofiles müssen ein bzw. mehrere Sensoren sehr genau positioniert werden. Dazu sind aus dem Stand der Technik aufwendige mechanische Trägerkonstruktionen bekannt, an welchen mehrere Sensoren angebracht sind. Solche aufwendigen Trägerkonstruktionen sind insbesondere beim Vermessen eines Langprofiles in einem laufenden Herstellungsbetrieb platzintensiv und umständlich zu montieren. Um Kosten zu sparen, werden anstatt der Trägerkonstruktionen oftmals beispielsweise Holzbretter mit einer definierten Breite bzw. Länge zum Abgleich mit einem zu vermessenden Langprofil an dasselbe angelegt. Eine solche Methode zum Feststellen von Abmessungen eines Langprofiles ist naturgemäß nicht sonderlich präzise.

Hier setzt die Erfindung an. Aufgabe der Erfindung ist es, ein Verfahren der eingangs genannten Art anzugeben, mit welchem ein Langprofil einfach und effizient sowie mit einer hohen Genauigkeit vermessen werden kann.

Ein weiteres Ziel ist es, eine Vorrichtung der eingangs genannten Art anzugeben, welche ein einfaches und effizientes sowie genaues Vermessen eines Langprofiles ermöglicht. Weiter ist es Ziel, eine Verwendung einer solchen Vorrichtung anzugeben.

Die Aufgabe wird erfindungsgemäß durch ein Verfahren nach Anspruch 1 gelöst.

Ein mit der Erfindung erzielter Vorteil ist insbesondere darin zu sehen, dass durch den verschiebbar an der Schwenkvorrichtung gelagerten Lichtschnittsensor ein Querschnitt eines Langprofiles aus Einzelaufnahmen rekonstruiert wird, welche von mehreren verschiedenen Richtungen aufgenommen werden. Weiter müssen dadurch an die Sensorpositionierung keine hohen Genauigkeitsanforderungen gestellt werden. Es sind somit genaue Messungen ohne aufwendige mechanische Trägerkonstruktionen möglich, was insbesondere beim Vermessen eines heißen Langprofiles große Vorteile bringt. Grundsätzlich kann mit dem erfindungsgemäßen Verfahren auch ein Querschnitt eines kalten oder auf Raumtemperatur befindlichen Langprofils festgestellt werden, besonders vorteilhaft ist dieses jedoch beim Vermessen eines Querschnittes eines heißen Langprofiles, da es dabei schwieriger ist, einen Messrahmen mit unveränderlicher Geometrie bereitzustellen. Mit einem erfindungsgemäßen Verfahren kann ein Querschnitt eines beliebig ausgeformten Langprofiles bestimmt bzw. festgestellt werden, wie beispielsweise einer Schiene, eines Trägers oder eines Rohres, insbesondere von Walzprodukten, aber auch von beispielsweise extrudierten Kunststoffprofilen. Durch die verschiebbare Lagerung des Lichtschnittsensors kann ein Langprofil flexibel und bevorzugt von allen Seiten vermessen werden, wobei der Lichtschnittsensor beabstandet vom Langprofil verschoben wird. Bevorzugt wird der Querschnitt von einem einzelnen an der Schwenkvorrichtung gelagerten Lichtschnittsensor bestimmt, wodurch Mehrkosten aufgrund einer Verwendung von mehreren Sensoren vermieden werden. Der Lichtschnittsensor wird bevorzugt mechanisch in bzw. von der Schwenkvorrichtung bewegt.

Vorteilhaft ist es, wenn vom Lichtschnittsensor eine etwa ringförmige Bewegung ausgeführt wird. Der Lichtschnittsensor wird dazu entlang eines Umfanges des Langprofiles um dasselbe und beabstandet davon geführt, wobei eine Messebene mit Vorteil etwa rechtwinklig bzw. senkrecht zu einer Längsachse des Langprofiles ist. Die Schwenkvorrichtung ist dazu bevorzugt so ausgebildet, dass der Lichtschnittsensor entlang dieser auf einer Kreisbahn bewegt wird, wobei der Lichtschnittsensor bevorzugt automatisiert bewegt bzw. verschoben wird. Es kann jedoch auch vorgesehen sein, dass der Lichtschnittsensor halbautomatisch oder manuell bewegt wird. Während des Bewegens bzw. Verschiebens des Lichtschnittsensors werden von diesem mehrere Einzelaufnahmen aus verschiedenen Richtungen aufgenommen, um anschließend einen gesamten Querschnitt des Langprofiles zu rekonstruieren.

Von Vorteil ist es, wenn das Langprofil von zumindest zwei, insbesondere drei oder mehr, Laserstrahlen vom Lichtschnittsensor angestrahlt wird. Dadurch wird das gesamte System unempfindlich gegenüber Messfehlern, welche entstehen, wenn eine Messebene nicht exakt rechtwinklig zur Achse des zu prüfenden Langprofiles liegt. Es ist also keine exakte Positionierung des Lichtschnittsensors notwendig. Der Querschnitt des Langprofiles wird durch das Lichtschnittverfahren bestimmt. Die Laserstrahlen sind dabei divergent ausgebildet und leuchten ein sogenanntes Messfeld aus.

Es ist von Vorteil, wenn ein Winkel zwischen einer Lichtschnittebene und einer Längsachse des Langprofiles aus Messdaten berechnet wird, wobei mit diesem Winkel eine Korrektur des aufgenommenen Querschnittes durchgeführt wird. Dadurch sind auch dann genaue Messungen möglich, wenn der Lichtschnittsensor nicht exakt rechtwinklig zur Längsachse des Langprofiles ausgerichtet ist.

Zweckmäßigerweise wird der Querschnitt des Langprofiles durch Zusammensetzen von mehreren Einzelaufnahmen festgestellt. Dafür wird vom Lichtschnittsensor eine Vielzahl von Einzelaufnahmen aus unterschiedlichen Positionen desselben aufgenommen. Eine Anzahl der Einzelaufnahmen ist dabei vom Querschnitt des Langprofiles abhängig, kann jedoch in einer Größenordnung von etwa 10 bis 200 liegen. Es kann vorgesehen sein, dass sich aufgenommene Bereiche von zwei oder mehr Einzelaufnahmen des Langprofiles zumindest teilweise überlappen bzw. entsprechen. Die Anzahl der Einzelaufnahmen kann dazu genutzt werden, eine Genauigkeit bzw. Robustheit des Verfahrens zu erhöhen. Darüber hinaus können dadurch Ausreißer in den Daten wie z. B. Zunder in einzelnen Messungen durch Mittelung, Fehlerausgleich und/oder Konsistenzprüfung oder dergleichen erkannt werden.

Erfindungsgemäß werden zumindest Teilinformationen einer Positionsänderung des Lichtschnittsensors aus Messdaten des Lichtschnittsensors selbst ermittelt. Dies ist günstig, um den Querschnitt des Langprofiles in weiterer Folge zusammenzusetzen. Es kann vorgesehen sein, dass einzelne Freiheitsgrade des Lichtschnittsensors oder eine gesamte Positionsänderung desselben ermittelt werden.

In Kombination dazu können zumindest Teilinformationen einer Positionsänderung des Lichtschnittsensors mit einem Winkelgeber und/oder Weggeber ermittelt werden. Es kann dazu allerdings genügen, einen Winkel bzw. einen Weg nur ungefähr zu kennen, das heißt, es müssen keine Genauigkeitsanforderungen in Größenordnung der Messgenauigkeit an den Winkelgeber und/oder Weggeber gestellt werden. Mit dem Winkelgeber und/oder Weggeber ist es möglich, nur einen von mehreren Freiheitsgraden einer Position des Lichtschnittsensors zu bestimmen. Es kann damit beispielsweise nur die Rotation des Lichtschnittsensors bestimmt werden, wohingegen eine Translation in x- und/oder y-Richtung über die Messung selbst bestimmt wird. Ein Winkelgeber kann grundsätzlich einen Drehwinkel bzw. dessen Änderung des Lichtschnittsensors erfassen, wohingegen ein Weggeber eine Translation in x- und/oder y-Richtung bzw. zurückgelegte Strecke des Lichtschnittsensors erfassen kann. Es kann auch vorgesehen sein, einen Winkelgeber und einen Weggeber zu kombinieren und somit sowohl einen Drehwinkel als auch eine Strecke zu erfassen bzw. zu bestimmen. Werden beispielsweise Rohre vermessen, genügt es, einen Winkel nur ungefähr zu kennen, da die Rotation der Einzelaufnahmen bei einem annährend kreisförmigen Querschnitt nur einen geringen Einfluss auf eine Genauigkeit der Messung hat.

Darüber hinaus kann zusätzlich oder in Kombination auch vorgesehen sein, dass zumindest Teilinformationen einer Positionsänderung des Lichtschnittsensors über in einem Messfeld befindliche Referenzobjekte ermittelt werden. Die Referenzobjekte sind dabei mit Vorteil statisch und ortsfest im Messfeld angeordnet und können beispielsweise als Zylinder ausgebildet sein.

Beim Ermitteln zumindest Teilinformationen einer Positionsänderung ist es stets günstig, wenn eine Genauigkeit der Schwenkvorrichtung keinen bzw. kaum Einfluss auf eine Genauigkeit von Endergebnissen hat.

Optional kann vorgesehen sein, dass die Schwenkvorrichtung mit dem Lichtschnittsensor entlang einer Längsachse des Langprofiles verfahren wird. Dazu kann an der Schwenkvorrichtung zumindest ein Rollelement und/oder Gleitelement wie beispielsweise eine Rolle oder ein Rad angebracht sein. Somit wird ein Querschnitt des Langprofiles über dessen gesamte Länge bestimmt. Alternativ zur Schwenkvorrichtung kann auch das Langprofil selbst entlang dessen Längsachse verfahren werden. Das Rollelement und/oder Gleitelement kann auch dazu verwendet werden, die Schwenkvorrichtung um das Langprofil zu positionieren, beispielsweise zum horizontalen Einschieben.

Weiter ist es von Vorteil, wenn die Schwenkvorrichtung zum Vermessen eines Langprofiles oberhalb desselben und dieses zumindest teilweise umschließend lösbar befestigt wird. Die Schwenkvorrichtung ist folglich mobil bzw. tragbar ausgebildet und wird zum Vermessen eines Langprofiles temporär bei diesem befestigt. Die Schwenkvorrichtung mit dem Lichtschnittsensor ist dazu bevorzugt handlich und leicht ausgebildet, sodass diese von einer Person ohne großen Kraftaufwand getragen und befestigt werden kann. Im Gegensatz zu einer mechanischen Trägerkonstruktion ist somit keine aufwendige und platzbeanspruchende Vorrichtung notwendig.

Vorteilhaft ist es weiter, wenn ein Querschnitt des Langprofiles über ortsfeste, insbesondere im Messfeld befindliche, Referenzobjekte festgestellt wird. Dadurch können auch Langprofile mit einem gleichmäßigen Querschnitt wie beispielsweise gerade Rohre vermessen werden. Anhand der montierbaren Referenzobjekte werden die Einzelaufnahmen des Lichtschnittsensors in weiterer Folge zusammengesetzt. Die Referenzobjekte können dazu beispielsweise als Zylinder ausgebildet sein.

Günstig ist es weiter, wenn der Lichtschnittsensor automatisiert bewegt wird. Eine solche Bewegung kann dazu von einer Steuereinheit gesteuert werden und individuell auf das zu vermessende Langprofil eingestellt werden. Der Lichtschnittsensor kann jedoch auch halb automatisch oder manuell bewegt bzw. verschoben werden. Es ist auch möglich, dass zwischen einer automatisierten und händischen Bewegung gewechselt werden kann.

Es kann bevorzugt vorgesehen sein, dass Daten vom Lichtschnittsensor kabellos zu einer Auswerteeinheit übertragen werden. Die kabellose bzw. drahtlose Übertragung kann beispielsweise über WLAN oder Bluetooth durchgeführt werden. Die Auswerteeinheit kann ein Tablet-PC sein, auf welchem Messergebnisse angezeigt und ausgewertet werden. In weiterer Folge kann damit auch unmittelbar in eine laufende Messung eingegriffen werden. Die Auswerteeinheit kann auch gleichzeitig als Steuereinheit ausgebildet sein. Wenngleich es auch vorgesehen sein kann, Bewegungen des Lichtschnittsensors in bzw. an der Schwenkvorrichtung über aufrollbare bzw. ausrollbare Kabel zu steuern, wird bevorzugt der gesamte Lichtschnittsensor kabellos betrieben, um beim Bewegen desselben unnötige Hindernisse durch Kabel zu vermeiden.

Das weitere Ziel wird mit einer Vorrichtung nach Anspruch 11 erreicht.

Ein damit erzielter Vorteil ist insbesondere darin zu sehen, dass durch die Ausbildung der Schwenkvorrichtung und des verschiebbar daran gelagerten Lichtschnittsensors ein Langprofil ohne spezielle Anforderungen an die Genauigkeit an den Lichtschnittsensor vermessbar ist. Durch diese Konstruktion ist ein Erstellen von mehreren Einzelaufnahmen möglich, welche in weiterer Folge zusammenführbar sind. Darüber hinaus ist mit einer solchen Vorrichtung ein Vermessen von nahezu beliebigen Profilquerschnitten wie beispielsweise einer Schiene, eines Trägers oder dergleichen möglich. Die Schwenkvorrichtung kann rein mechanisch ausgebildet sein, wodurch auch eine Bewegung des Lichtschnittsensors mechanisch erfolgt. Der Lichtschnittsensor ist stets ausreichend beabstandet vom Langprofil angeordnet, sodass auch ein heißes Langprofil vermessbar ist, ohne den Lichtschnittsensor bzw. die Vorrichtung zu überhitzen. Grundsätzlich ist mit der erfindungsgemäßen Vorrichtung auch ein Querschnitt eines kalten oder auf Raumtemperatur befindlichen Langprofils feststellbar, besonders vorteilhaft ist dieses jedoch beim Vermessen eines Querschnittes eines heißen Langprofiles, da es dabei schwieriger ist, einen Messrahmen mit unveränderlicher Geometrie bereitzustellen.

Vorteilhaft ist es, wenn der Lichtschnittsensor auf annähernd einer Kreisbahn um das Langprofil verschiebbar ist. Dabei ist dieser mit Vorteil stets etwa senkrecht zum Langprofil ausgerichtet. Hierfür kann die Schwenkvorrichtung ebenfalls als annähernde Kreisbahn ausgebildet sein, wobei ein Teil der ringförmigen Schwenkvorrichtung ausgespart sein kann. Eine Bewegung des Lichtschnittsensors an der Schwenkvorrichtung erfolgt dabei mit Vorteil automatisiert. Es kann jedoch auch vorgesehen sein, dass die Bewegung bzw. Verschiebung des Lichtschnittsensors halb automatisch bzw. händisch steuerbar ist.

Günstig ist es, wenn die Schwenkvorrichtung zumindest eine Befestigungseinrichtung zur lösbaren Befestigung der Vorrichtung für einen Messvorgang umfasst. Dadurch ist die Vorrichtung mobil ausgebildet, wodurch diese zur Durchführung eines Messvorganges um das zu vermessende Langprofil befestigbar ist. Die Schwenkvorrichtung ist weiter bei einer Nichtbenutzung aus deren Befestigung um das Langprofil lösbar. Die Befestigungseinrichtung kann an einem oberen Ende der Schwenkvorrichtung angebracht sein, wodurch diese gleichzeitig als Trageeinrichtung nutzbar ist. Die Vorrichtung ist dadurch mobil bewegbar ausgebildet, wobei diese bevorzugt von einer Person und ohne weitere Hilfsmittel tragbar und um das Langprofil befestigbar ist. Alternativ kann die zumindest eine Befestigungseinrichtung seitlich an der Schwenkvorrichtung angebracht und derart ausgebildet sein, dass die Vorrichtung um das Langprofil bzw. dieses teilweise umschließend einhängbar ist. Beispielsweise kann diese aus zwei Teilen gebildet sein, welche an zwei Seiten der Schwenkvorrichtung angeordnet sein können. Die Befestigungseinrichtung kann auch verstellbar ausgebildet sein, sodass diese universell einsetzbar ist.

Optional kann zumindest ein Rollelement und/oder Gleitelement vorgesehen sein, um die Vorrichtung über diese entlang einer Längsachse des Langprofiles zu verschieben. Das zumindest eine Rollelement und/oder Gleitelement kann beispielsweise seitlich an der Schwenkvorrichtung befestigt sein. Weiter kann die Vorrichtung ein dem Rollelement entsprechendes ortsfestes Gegenstück umfassen, um eine Längsbewegung der Vorrichtung zu ermöglichen, beispielsweise eine Schiene. Dadurch ist es möglich, einen Querschnitt eines heißen Langprofiles entlang dessen gesamter Länge zu bestimmen. Alternativ ist es auch möglich, das Langprofil selbst entlang dessen Längsachse zu bewegen, wie dies z. B. in einem laufenden Herstellungsverfahren erfolgt, beispielsweise beim Walzen von Schienen oder Extrudieren von Kunststoffprofilen. Das Rollelement und/oder Gleitelement kann auch zum Einhängen bzw. Einschieben der Vorrichtung um das Langprofil verwendet werden.

Weiter ist es von Vorteil, wenn eine Auswerteeinheit vorgesehen ist, wobei eine Datenübertragung zwischen derselben und dem Lichtschnittsensor kabellos erfolgt. Die Auswerteeinheit kann dabei mit Vorteil als Tablet-PC ausgebildet sein und die kabellose bzw. drahtlose Datenübertragung über WLAN oder Bluetooth erfolgen. Wenngleich es auch vorgesehen sein kann, Bewegungen des Lichtschnittsensors in bzw. an der Schwenkvorrichtung über aufrollbare bzw. ausrollbare Kabel zu steuern, ist es günstig, wenn die gesamte Vorrichtung frei von Kabeln ist, sodass auch eine Bewegung des Lichtschnittsensors nicht durch Kabel behindert wird. Es kann auch günstig sein, wenn die Auswerteeinheit gleichzeitig als Steuereinheit nutzbar ist, sodass über diese eine Bewegung und/oder eine Messung des Lichtschnittsensors steuerbar ist.

Vorteilhaft ist es weiter, wenn eine optische und/oder akustische Signal gebende Einrichtung vorgesehen ist. Insbesondere beim Vermessen eines auf einer erhöhten Temperatur befindlichen bzw. heißen Langprofiles ist eine solche Einrichtung günstig, um die Vorrichtung vor einer Überhitzung zu schützen bzw. zu warnen. Die optische und/oder akustische Signal gebende Einrichtung kann beispielsweise als Sirene ausgebildet sein, welche zudem ein Warnlicht umfasst und bei einer Überschreitung einer definierten Temperatur ein Warnsignal abgeben kann.

Zweckmäßigerweise können innerhalb der Schwenkvorrichtung ortsfeste Referenzobjekte angeordnet sein, bevorzugt in einem Messfeld des Lichtschnittsensors. Damit ist es möglich, auch Langprofile ohne markante Ausprägungen wie beispielsweise gerade Rohre zu vermessen. Anhand der Referenzobjekte, welche beispielsweise als Zylinder ausgebildet sein können, ist ein Zusammensetzen von aufgenommenen Einzelaufnahmen des Lichtschnittsensors möglich. Über die Referenzobjekte ist zudem zumindest eine Teilinformation einer Bewegungsänderung des Lichtschnittsensors ermittelbar.

Gemäß Anspruch 15 erfolgt eine Verwendung einer erfindungsgemäßen Vorrichtung beim Bestimmen eines Querschnittes eines auf einer erhöhten Temperatur befindlichen Langprofiles im laufenden Herstellungsbetrieb.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung einer erfindungsgemäßen Vorrichtung;
Fig. 2 eine schematische Darstellung einer weiteren erfindungsgemäßen Vorrichtung;
Fig. 3 eine schematische Darstellung einer weiteren erfindungsgemäßen Vorrichtung.

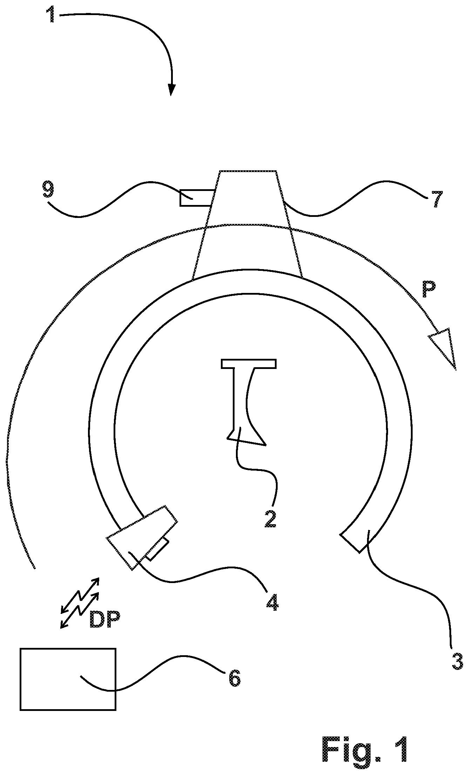

Fig. 1 zeigt einen Schnitt durch eine schematische Darstellung einer erfindungsgemäßen Vorrichtung 1 zum Vermessen eines Langprofiles 2 mitsamt dem Langprofil 2. Die Vorrichtung 1 umfasst einen Lichtschnittsensor 4 und eine mechanische Schwenkvorrichtung 3, an welcher der Lichtschnittsensor 4 verschiebbar gelagert ist. Die Vorrichtung 1 eignet sich insbesondere zum Vermessen eines auf einer erhöhten Temperatur befindlichen Langprofiles 2 wie beispielsweise eines auf Walzhitze befindlichen Walzprofiles wie eine Schiene oder ein I-Träger, da eine Messung kontaktlos und bevorzugt automatisiert durchführbar ist. Gemäß Fig. 1 ist die Schwenkvorrichtung 3 ringförmig ausgebildet, sodass der Lichtschnittsensor 4 um etwa 360° daran verschiebbar ist. In Fig. 1 ist die Bewegungs- bzw. Verschieberichtung des Lichtschnittsensors 4 mit einem Pfeil P dargestellt.

Es ist möglich, einen gesamten Querschnitt des Langprofiles 2 mit nur einem einzelnen Lichtschnittsensor 4 zu bestimmen. Dieser nimmt mehrere Einzelbildaufnahmen auf, welche anschließend zusammengesetzt werden, um den Querschnitt des Langprofiles 2 wiederzugeben. Es können z. B. etwa 10 bis 200 Einzelaufnahmen aufgenommen und in weiterer Folge durch ein Zusammensetzen dieser der Querschnitt des Langprofiles 2 festgestellt werden. Zum Vermessen des Langprofiles 2 ist der Lichtschnittsensor 4 so ausgebildet, dass dieser zwei, bevorzugt drei, Laserstrahlen auf das Langprofil 2 abstrahlt. Die Laserstrahlen sind dabei divergent ausgebildet und leuchten ein sogenanntes Messfeld am Langprofil 2 aus.

Erfindungsgemäß werden zumindest Teilinformationen einer Positionsänderung des Lichtschnittsensors aus Messdaten des Lichtschnittsensors selbst ermittelt. Die Vorrichtung 1 kann weiter einen Winkelgeber und/oder Weggeber umfassen, um eine Positionsänderung des Lichtschnittsensors 4 zu bestimmen. Es kann dazu allerdings genügen, einen Winkel bzw. einen Weg nur ungefähr zu kennen, das heißt, es müssen keine Genauigkeitsanforderungen in Größenordnung der Messgenauigkeit an den Winkelgeber und/oder Weggeber gestellt werden. Mit dem Winkelgeber und/oder Weggeber ist es möglich, nur einen von mehreren Freiheitsgraden einer Position des Lichtschnittsensors zu bestimmen. Es kann damit beispielsweise nur die Rotation des Lichtschnittsensors 4 bestimmbar sein, wohingegen eine Translation in x- und/oder y-Richtung über die Messung selbst feststellbar ist.

Es ist günstig, wenn die gesamte Vorrichtung 1 kabellos betrieben ist. Dazu kann der Lichtschnittsensor 4 kabellos bzw. drahtlos ansteuerbar sein, z. B. über WLAN oder Bluetooth. Darüber hinaus kann eine Auswerteeinheit 6 vorgesehen sein, welche einerseits vom Lichtschnittsensor 4 aufgenommene bzw. generierte Daten auswertet und andererseits denselben ansteuert. Die Auswerteeinheit 6 kann beispielsweise als Tablet-PC ausgebildet sein und über WLAN mit dem Lichtschnittsensor 4 kommunizieren. In der Fig. 1 ist die kabellose Datenübertragung zwischen dem Lichtschnittsensor 4 und der Auswerteeinheit 6 mit einem Doppelpfeil DP dargestellt. Es kann auch vorgesehen sein, dass mit der Auswerteeinheit 6 ein Messvorgang unmittelbar beeinflussbar ist.

Insbesondere zum Vermessen eines heißen Langprofiles 2 kann die Vorrichtung 1 eine optische und/oder akustische Signal gebende Einrichtung 9 umfassen, um vor einer Überhitzung der Vorrichtung 1 zu warnen. Diese Einrichtung 9 kann beispielsweise an einem oberen Ende der Schwenkvorrichtung 3 angeordnet und als leuchtende Sirene ausgebildet sein.

Die Vorrichtung 1 ist bevorzugt tragbar ausgebildet und umfasst eine Befestigungseinrichtung 7 zur lösbaren Befestigung derselben für einen Messvorgang. Dafür ist die Vorrichtung 1 insbesondere oberhalb bzw. teilweise um das Langprofil 2 herum befestigbar, z. B. einhängbar, wozu die Befestigungseinrichtung 7 an einem oberen Ende der Vorrichtung 1 angeordnet sein kann. Nach einem abgeschlossenen Messvorgang ist die Vorrichtung 1 bzw. die Befestigungseinrichtung 7 wieder lösbar. Die Befestigungseinrichtung 7 kann gleichzeitig so ausgebildet sein, dass die Vorrichtung 1 von einer Person getragen werden kann. Dazu ist die Vorrichtung 1 bevorzugt handlich bzw. klein und leicht ausgebildet, sodass diese ohne große Umstände bzw. großen Kraftaufwand von einer Person getragen und befestigt werden kann.

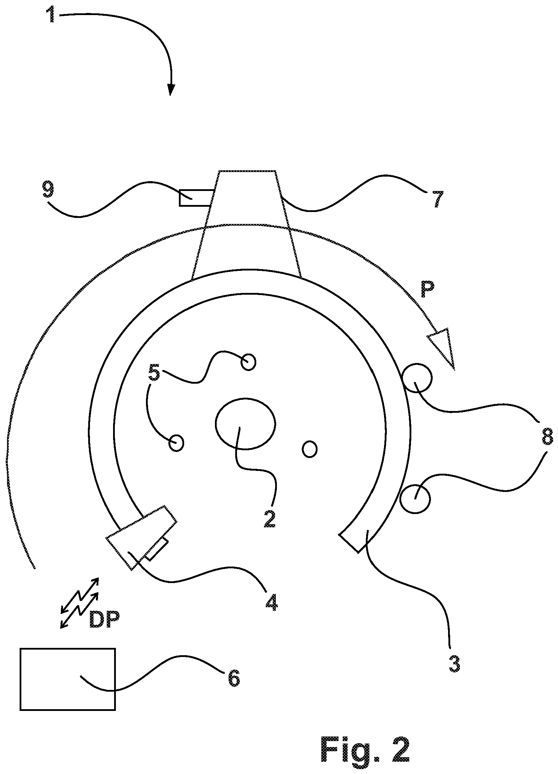

Fig. 2 zeigt einen Schnitt durch eine weitere erfindungsgemäße Vorrichtung 1 zum Vermessen eines Langprofiles 2 mitsamt dem Langprofil 2. Dabei ist die Befestigungseinrichtung 7 vor allem als Tragevorrichtung nutzbar. Die Vorrichtung 1 umfasst zwei Rollelemente 8, über welche dieselbe um das Langprofil 2 einhängbar ist.

Die Rollelemente 8 können auf einer Seite der Vorrichtung 1 an der Schwenkvorrichtung 3 beabstandet voneinander angeordnet sein. Weiter können Schienen vorgesehen sein, welche eine Verschiebung der Vorrichtung 1 in Richtung einer Längsachse des Langprofiles 2 ermöglichen.

Als Alternative zu den Rollelementen 8 und/oder Gleitelementen oder zusätzlich dazu kann die Vorrichtung 1 beispielsweise zwei Befestigungseinrichtungen 7 umfassen, welche an zwei Seiten der Schwenkvorrichtung 3 befestigt sind und über welche die Vorrichtung 1 zur Durchführung eines Messvorganges so einhängbar ist, dass die Schwenkvorrichtung 3 das Langprofil 2 zumindest teilweise umschließt. Die Befestigungseinrichtungen 7 können weiter in mehrere Richtungen verstellbar ausgebildet sein, sodass die Vorrichtung 1 möglichst flexibel einsetzbar ist. Günstig ist es weiter, wenn die Vorrichtung 1 zusätzlich eine an einem oberen Ende derselben gelagerte Trageeinrichtung umfasst.

In Fig. 2 ist ein gerades Langprofil 2 mit einem etwa kreisförmigen Querschnitt gezeigt. Ein solches Langprofil 2 ist aufgrund des Fehlens von markanten Ausprägungen mit dem Lichtschnittsensor 4 schwer zu vermessen. Deshalb sind Referenzobjekte 5 vorgesehen, welche in einem Messfeld des Lichtschnittsensors 4 lösbar befestigbar sind, um anhand derselben ein Zusammensetzen von Einzelaufnahmen des Lichtschnittsensors 4 zu ermöglichen. Die Referenzobjekte 5 können beispielsweise als Zylinder ausgebildet sein.

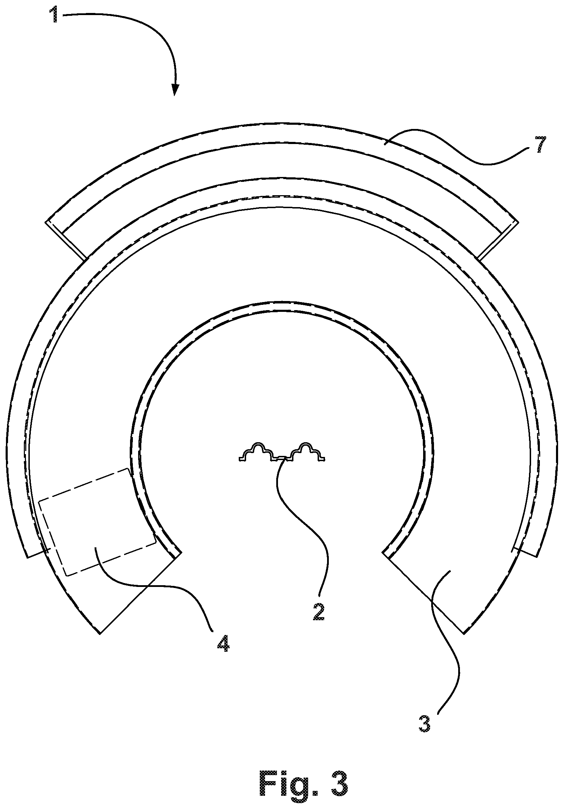

Die Schwenkvorrichtung 3 kann beispielsweise aus zwei zueinander verschiebbaren, etwa ringförmigen Schienen gebildet sein, wobei auf einer davon der Lichtschnittsensor 4 angeordnet sein kann und mit derselben um das Langprofil 2 bewegt wird. Alternativ kann auch vorgesehen sein, dass ein Wagen mit dem Lichtschnittsensor 4 in einem torusförmigen Gehäuse verschiebbar ist, wobei der Wagen mit dem Lichtschnittsensor 4 innerhalb des Gehäuses gelagert bzw. verschiebbar ist. Eine Darstellung einer solchen Vorrichtung 1 ist in Fig. 3 gezeigt. Dazu können am Wagen beispielsweise Reibräder angeordnet sein, welche sich im Gehäuse automatisiert bewegen. Die Schwenkvorrichtung 3 kann jedoch auch in einer beliebigen anderen Weise ausgebildet sein. In der Fig. 3 ist die Befestigungseinrichtung 7 dargestellt, welche insbesondere als Trageeinrichtung ausgebildet ist.

Bei einem erfindungsgemäßen Verfahren wird ein Querschnitt eines insbesondere heißen Langprofiles 2 festgestellt. Insbesondere wird ein Querschnitt in einem laufenden Betrieb bzw. während eines Herstellungsverfahrens eines Langprofiles 2 festgestellt. Dazu wird das Langprofil 2 mit einem Lichtschnittsensor 4 vermessen, welcher an einer mechanischen Schwenkvorrichtung 3 gelagert ist. Zum Feststellen des Querschnittes des Langprofiles 2 wird der Lichtschnittsensor 4 um einen Umfang des Langprofiles 2 und beabstandet davon um dasselbe geführt. Dabei wird das Langprofil 2 von insbesondere drei Laserstrahlen angestrahlt und in weiterer Folge werden mehrere bzw. eine Vielzahl von Einzelaufnahmen aus vielen verschiedenen Richtungen erstellt. Dazu ist es günstig, wenn der Lichtschnittsensor 4 bzw. dessen Messebene etwa rechtwinklig bzw. senkrecht zu einer Längsachse des Langprofiles 2 liegt. Bei einer Verwendung von drei Laserstrahlen ist dies jedoch nicht unbedingt notwendig, da ein solches System unempfindlich gegenüber Messfehlern ist. Die Vielzahl von Einzelaufnahmen wird dazu genutzt, eine Genauigkeit eines Ergebnisses und eine Robustheit des Verfahrens zu erhöhen sowie Ausreißer in Daten zu erkennen. Es können beispielsweise Zunder in einzelnen Messungen durch Mittelung, Fehlerausgleich bzw. Konsistenzprüfung erkannt und in weiterer Folge eliminiert werden.

Die Schwenkvorrichtung 3 ist weiter so ausgebildet, dass vom Lichtschnittsensor 4 eine etwa ringförmige Bewegung entlang einer Kreisbahn durchgeführt wird und dieser etwa 360° um einen Umfang des Langprofiles 2 geführt wird.

Das Langprofil 2 kann im laufenden Betrieb vermessen werden, wobei dieses entlang dessen Längsachse bewegt wird und die Schwenkvorrichtung 3 mit dem Lichtschnittsensor 4 ortsfest angebracht wird. Alternativ ist es auch möglich, dass die Schwenkvorrichtung 3 mit dem Lichtschnittsensor 4 entlang der Längsachse des Langprofiles 2 bewegt wird.

Die Schwenkvorrichtung 3 mit dem Lichtschnittsensor 4 kann tragbar ausgebildet sein und für einen Messvorgang um das Langprofil 2 lösbar befestigt werden. Die Schwenkvorrichtung 3 wird dabei so angebracht, dass diese das zu vermessende Langprofil 2 zumindest teilweise umschließt wie in den Fig. 1 und 2 gezeigt. Die Schwenkvorrichtung 3 mit dem Lichtschnittsensor 4 kann für einen Messvorgang temporär um das Langprofil 2 angebracht und nach einem Abschluss desselben wieder entfernt werden. Dadurch ist eine flexible Vermessung eines Querschnittes des Langprofiles 2 möglich, ohne dass eine aufwendige und schwere Rahmenkonstruktion dauerhaft angebracht werden muss.

Es kann ferner vorgesehen sein, dass Daten vom Lichtschnittsensor 4 zu einer Auswerteeinheit 6 übertragen werden, wobei eine Übertragung bevorzugt kabellos bzw. drahtlos durchgeführt wird. Beim Vermessen des Langprofiles 2 werden mehrere Einzelaufnahmen aus verschiedenen Richtungen erstellt, welche von der Auswerteeinheit 6 zusammengesetzt werden. Mit der Auswerteeinheit 6 kann weiter der Lichtschnittsensor 4 angesteuert werden.

Soll ein einfacher Querschnitt beispielsweise eines geraden Rohres festgestellt werden, können ortsfeste Referenzobjekte 5 in einem Messfeld des Lichtschnittsensors 4 befestigt werden, um ein Zusammensetzen der Einzelaufnahmen trotz der gleichmäßigen Form des Langprofiles 2 zu ermöglichen.

Mit einer erfindungsgemäßen Vorrichtung 1 kann ein Querschnitt eines beliebig ausgebildeten Langprofiles 2 in einer einfachen Weise bestimmt werden, da nur ein einzelner Lichtschnittsensor 4 notwendig ist.

## Patentansprüche

1. Verfahren zum Vermessen eines insbesondere auf einer erhöhten Temperatur befindlichen Langprofiles (2), wobei ein Querschnitt des Langprofiles (2) festgestellt wird, wobei das Langprofil (2) mit einem verschiebbar an einer Schwenkvorrichtung (3) gelagerten Lichtschnittsensor (4) vermessen wird, **dadurch gekennzeichnet, dass** zumindest Teilinformationen einer Positionsänderung des Lichtschnittsensors (4) aus Messdaten des Lichtschnittsensors (4) selbst ermittelt werden.

2. Verfahren nach Anspruch 1, **dadurch gekennzeichnet, dass** vom Lichtschnittsensor (4) eine etwa ringförmige Bewegung ausgeführt wird.

3. Verfahren nach Anspruch 1 oder 2, **dadurch gekennzeichnet, dass** das Langprofil (2) von zumindest zwei, insbesondere drei oder mehr, Laserstrahlen vom Lichtschnittsensor (4) angestrahlt wird.

4. Verfahren nach einem der Ansprüche 1 bis 3, **dadurch gekennzeichnet, dass** der Querschnitt des Langprofiles (2) durch Zusammensetzen von mehreren Einzelaufnahmen festgestellt wird.

5. Verfahren nach einem der Ansprüche 1 bis 4, **dadurch gekennzeichnet, dass** zumindest Teilinformationen einer Positionsänderung des Lichtschnittsensors (4) mit einem Winkelgeber und/oder Weggeber ermittelt werden.

6. Verfahren nach einem der Ansprüche 1 bis 5, **dadurch gekennzeichnet, dass** zumindest Teilinformationen einer Positionsänderung des Lichtschnittsensors (4) über in einem Messfeld befindliche Referenzobjekte (5) ermittelt werden.

7. Verfahren nach einem der Ansprüche 1 bis 6, **dadurch gekennzeichnet, dass** die Schwenkvorrichtung (3) beim Vermessen des Langprofiles (2) oberhalb desselben und dieses zumindest teilweise umschließend lösbar befestigt wird.

8. Verfahren nach einem der Ansprüche 1 bis 7, **dadurch gekennzeichnet, dass** ein Querschnitt des Langprofiles (2) über ortsfeste, insbesondere im Messfeld befindliche, Referenzobjekte (5) festgestellt wird.

9. Verfahren nach einem der Ansprüche 1 bis 8, **dadurch gekennzeichnet, dass** der Lichtschnittsensor (4) automatisiert bewegt wird.

10. Verfahren nach einem der Ansprüche 1 bis 9, **dadurch gekennzeichnet, dass** Daten vom Lichtschnittsensor (4) kabellos zu einer Auswerteeinheit (6) übertragen werden.

11. Vorrichtung (1) zum Vermessen eines insbesondere auf einer erhöhten Temperatur befindlichen Langprofiles (2), umfassend eine Messeinrichtung zur Feststellung eines Querschnittes des Langprofiles (2), wobei eine Schwenkvorrichtung (3) vorgesehen ist und die Messeinrichtung als Lichtschnittsensor (4) ausgebildet ist, wobei der Lichtschnittsensor (4) verschiebbar an der Schwenkvorrichtung (3) gelagert ist, **dadurch gekennzeichnet, dass** die Vorrichtung so gestaltet ist, dass zumindest Teilinformationen einer Positionsänderung des Lichtschnittsensors (4) aus Messdaten des Lichtschnittsensors (4) selbst ermittelbar sind.

12. Vorrichtung (1) nach Anspruch 11, **dadurch gekennzeichnet, dass** der Lichtschnittsensor (4) auf annähernd einer Kreisbahn um das Langprofil (2) verschiebbar ist.

13. Vorrichtung (1) nach Anspruch 11 oder 12, **dadurch gekennzeichnet, dass** die Schwenkvorrichtung (3) zumindest eine Befestigungseinrichtung (7) zur lösbaren Befestigung der Vorrichtung (1) für einen Messvorgang umfasst.

14. Vorrichtung (1) nach einem der Ansprüche 11 bis 13, **dadurch gekennzeichnet, dass** innerhalb der Schwenkvorrichtung (3) ortsfeste Referenzobjekte (5) angeordnet sind, bevorzugt in einem Messfeld des Lichtschnittsensors (4).

15. Verwendung einer Vorrichtung (1) nach einem der Ansprüche 11 bis 14 zum Bestimmen eines Querschnittes eines auf einer erhöhten Temperatur befindlichen Langprofiles (2) im laufenden Herstellungsbetrieb.

## Claims

1. A method for measuring a long profile (2), in particular one which has been brought to an elevated temperature, wherein a cross section of the long profile (2) is determined, wherein the long profile (2) is measured with a light section sensor (4) which is mounted slidably on a swivel device (3), **characterized in that** at least partial information of a position change of the light section sensor (4) is obtained from measurement data of the light section sensor (4) itself.

2. The method according to claim 1, **characterized in that** a roughly annular movement is executed by the light section sensor (4).

3. The method according to claim 1 or 2, **characterized in that** the long profile (2) is irradiated by at least two, in particular three or more, laser beams from the light section sensor (4).

4. The method according to any one of claims 1 to 3, **characterized in that** the cross section of the long profile (2) is determined by combining several individual recordings.

5. The method according to any one of claims 1 to 4, **characterized in that** at least partial information of a position change of the light section sensor (4) is obtained using a linear encoder and/or an angular encoder.

6. The method according to any one of claims 1 to 5, **characterized in that** at least partial information of a position change of the light section sensor (4) is obtained using reference objects (5) situated in a measurement field.

7. The method according to any one of claims 1 to 6, **characterized in that** the swivel device (3), during the measurement of the long profile (2), is detachably fastened above the latter and in such a way that it at least partially encloses the latter.

8. The method according to any one of claims 1 to 7, **characterized in that** a cross section of the long profile (2) is determined using stationary reference objects (5), in particular ones situated in the measurement field.

9. The method according to any one of claims 1 to 8, **characterized in that** the light section sensor (4) is moved automatically.

10. The method according to any one of claims 1 to 9, **characterized in that** data from the light section sensor (4) are wirelessly transmitted to an analysis unit (6).

11. A device (1) for measuring a long profile (2), in particular one which has been brought to an elevated temperature, comprising a measuring mechanism for determining a cross section of the long profile (2), wherein a swivel device (3) is provided and the measurement mechanism is configured as a light section sensor (4), wherein the light section sensor (4) is mounted slidably on the swivel device (3), **characterized in that** the device is designed such that at least partial information of a position change of the light section sensor (4) can be obtained from measurement data of the light section sensor (4) itself.

12. The device (1) according to claim 11, **characterized in that** the light section sensor (4) is slidable along a roughly circular path about the long profile (2).

13. The device (1) according to claim 11 or 12, **characterized in that** the swivel device (3) comprises at least one fastening mechanism (7) for detachably fastening the device (1) for a measurement process.

14. The device (1) according to any one of claims 11 to 13, **characterized in that** stationary reference objects (5) are arranged within the swivel device (3), preferably in a measurement field of the light section sensor (4).

15. Use of a device (1) according to any one of claims 11 to 14 for determining a cross section of a long profile (2), which has been brought to an elevated temperature, during the production operation.

## Revendications

1. Procédé de mesurage d'un profilé longitudinal (2) se trouvant notamment à une température élevée, une section transversale du profilé longitudinal (2) étant constatée, le profilé longitudinal (2) étant mesuré avec un capteur de profil (4) logé de manière déplaçable sur un dispositif de pivotement (3), **caractérisé en ce qu'**au moins des informations partielles sur un changement de position du capteur de profil (4) sont déterminées à partir de données de mesure du capteur de profil (4) même.

2. Procédé selon la revendication 1, **caractérisé en ce qu'**un déplacement approximativement annulaire est effectué par le capteur de profil (4).

3. Procédé selon la revendication 1 ou 2, **caractérisé en ce que** le profilé longitudinal (2) est irradié par au moins deux, notamment trois faisceaux laser ou plus du capteur de profil (4).

4. Procédé selon l'une quelconque des revendications 1 à 3, **caractérisé en ce que** la section transversale du profilé longitudinal (2) est constatée par assemblage de plusieurs enregistrements isolés.

5. Procédé selon l'une quelconque des revendications 1 à 4, **caractérisé en ce qu'**au moins des informations partielles d'un changement de position du capteur de profil (4) sont déterminées avec un capteur d'angle et/ou un capteur de déplacement.

6. Procédé selon l'une quelconque des revendications 1 à 5, **caractérisé en ce qu'**au moins des informations partielles sur un changement de position du capteur de profil (4) au-dessus d'objets de référence (5) se trouvant dans un champ de mesure sont déterminées.

7. Procédé selon l'une quelconque des revendications 1 à 6, **caractérisé en ce que** lors du mesurage du profilé longitudinal (2), le dispositif de pivotement (3) est fixé de manière amovible et en l'entourant au moins partiellement au-dessus de celui-ci.

8. Procédé selon l'une quelconque des revendications 1 à 7, **caractérisé en ce qu'**une section transversale du profilé longitudinal (2) est constatée au-dessus d'objets de référence (5) stationnaires, se trouvant dans le champ de mesure.

9. Procédé selon l'une quelconque des revendications 1 à 8, **caractérisé en ce que** le capteur de profil (4) est déplacé de manière automatisée.

10. Procédé selon l'une quelconque des revendications 1 à 9, **caractérisé en ce que** des données du capteur de profil (4) sont transmises sans fil vers une unité d'évaluation (6).

11. Dispositif (1) de mesurage d'un profilé longitudinal (2) se trouvant notamment à une température élevée, comprenant un système de mesure pour constater une section transversale du profilé longitudinal (2), un dispositif de pivotement (3) étant prévu et le système de mesure étant réalisé sous la forme d'un capteur de profil (4), le capteur de profil (4) étant logé de manière déplaçable sur le dispositif de pivotement (3), **caractérisé en ce que** le dispositif est conçu de telle sorte qu'au moins des informations partielles d'un changement de position du capteur de profil (4) soient susceptibles d'être déterminées à partir des données de mesure du capteur de profil (4) même.

12. Dispositif (1) selon la revendication 11, **caractérisé en ce que** le capteur de profil (4) est déplaçable sur approximativement une trajectoire circulaire autour du profilé longitudinal (2).

13. Dispositif (1) selon la revendication 11 ou 12, **caractérisé en ce que** le dispositif de pivotement (3) comprend au moins un système de fixation (7) pour la fixation amovible du dispositif (1) pour une opération de mesure.

14. Dispositif (1) selon l'une quelconque des revendications 11 à 13, **caractérisé en ce qu'**à l'intérieur du dispositif de pivotement (3) sont placés des objets de référence (5) stationnaires, de préférence dans un champ de mesure du capteur de profil (4).

15. Utilisation d'un dispositif (1) selon l'une quelconque des revendications 11 à 14 pour définir une section transversale d'un profilé longitudinal (2) se trouvant à une température élevée en cours des opérations de fabrication.
